# EUROPEAN PATENT APPLICATION

(11) **EP 4 224 664 A1**
(43) Date of publication of application: **09.08.2023**
(21) Application number: 22155595.6
(22) Date of filing: 08.02.2022
(51) Int. Cl.: H02J 7/00, H01R 12/70, H04R 1/10

(54) **CASE DEVICE**

(71) Applicant: GN Hearing A/S, 2750 Ballerup (DK)
(72) Inventor: FRYDENDAL, Michael, 2750 Ballerup (DK)
(74) Representative: GN Store Nord A/S

(57) **Abstract**

The present disclosure relates to a case device comprising a rechargeable battery and a charging port electrically connected to the rechargeable battery and connected to a first circuit board. The case device further comprises a clamping device attached to the first circuit board and being configured for clamping the charging port onto the first circuit board.

## Description

### TECHNICAL FIELD

The present invention relates to a case device.

### BACKGROUND

Battery operated products are becoming a vital part of our lives, as more people bring their electronic devices with them when on the move. Since battery operated products are continuing to gain traction, the need for better and faster battery charging is of the essence.

To achieve faster charging times a logical solution has been to increase the power output through charging cables and charging ports. However, with an increased power output the risk of thermal runaway events occurring increases correspondingly. Especially, in charging ports the risk of liquid or dirt causing short circuits leading to thermal runaways is a major concern, as the thermal runaway events may in the worst-case scenarios lead to larger fires being started.

During a thermal runaway event at the charging port, the temperatures generated may transfer to other components of the case device, e.g., the battery associated with the charging port. The transferred heat from the charging port may result in the battery itself starting to undergo a thermal runaway event. During a thermal runaway event in a battery the temperature of the battery may rise rapidly leading to the battery catching fire, and in some cases the battery may even explode. As the battery catches fire, it may act as a fire starter. Elevated temperatures in the battery may also lead to reduced performance of the battery i.e., deterioration of charging and discharging characteristics, and reduced battery life.

During thermal runaway event at the charging port, the charging port itself may be heated to elevated temperatures, the applicant has during tests on USB-C charging ports measured temperatures as high as 550°C in the charging port. Consequently, the charging port itself may pose a fire hazard.

Furthermore, the heat generated at the charging port may negatively affect other components in the vicinity of the charging port.

### SUMMARY

It is an object of the present invention to provide an improved case device, which overcomes or at least alleviates some of the problems of the prior art. According to a first aspect of the invention there is provided a case device, comprising a main housing comprising a charging opening extending longitudinally with a first length in a longitudinal direction, a rechargeable battery arranged within the main housing, a charging port electrically connected to the rechargeable battery to allow for recharging of the rechargeable battery, and wherein the charging port is accessible by a user of the case device via the charging opening, a first circuit board arranged within the first main housing, wherein the charging port is attached to the first circuit board, and wherein the charging port is electrically connected to the first circuit board, characterized in that, the case device comprises a clamping device attached to the first circuit board and being configured for clamping the charging port onto the first circuit board.

By clamping the charging port to the first circuit board it prevents the charging port from being separated from the first circuit board during a thermal runaway event. The risk of the charging port separating from the first circuit board is especially pronounced during a thermal runaway event at the charging port. During a thermal runaway event the attachment between the charging port and first circuit board may deteriorate because of the elevated temperatures, e.g., detachment may occur because of the charging port unsoldering from the first circuit board. By preventing the charging port from being released from the first circuit board it reduces the risk of the charging port posing a fire hazard, since the risk of the charging port dropping out of the case device and acting as a fire starter is reduced.

A thermal runaway event is to be understood as a process which generates heat which in return further accelerates the process, hence reaching higher and higher temperatures. The release of heat from the process may slow down or fully stop thermal runaway events. A thermal runaway event may take place at the charging port caused by dirt or liquids short circuiting the charging port. A thermal runaway event may take place at the rechargeable battery caused by elevated temperatures, e.g., because of heat generated at the charging port.

A casing device may be any device configured to hold and/or to protect something. The casing device itself may form part of a larger housing. The casing device may be a modular component. The casing device may be a charging cradle for one or more wireless devices, e.g., a charging cradle for earbuds or a hearing aid. The casing device may be an earcup forming part of a headset.

The main housing may assume any desired shape. The main housing preferably comprises a hollow interior configured for receiving one or more items. The main housing may be separated into sub housings by means of a partition. In one preferred embodiment the main housing comprises a first sub housing and a second sub housing. The first sub housing may define a first hollow interior for receiving one or more items e.g., a pair of earbuds. The second sub housing may define a second hollow interior for housing one or more components. Preferably, the second sub housing is configured for housing one or more electrical components, such as the rechargeable battery, the charging port, and/or the first circuit board.

The main housing may be an earcup of a headset or a charging cradle comprising one or more electrical and/or mechanical components, e.g., speakers, microphones, input transducers, LEDs (Light emitting diodes), a processor, a transceiver for wireless communication etc.

The charging opening may assume a rectangular shape, a circular shape, or any other shape. The charging opening is preferably formed with a complementary shape to the charging port. The charging opening is preferably formed in an outer surface of the main housing. The charging opening may be formed as an integral part of the main housing. The charging opening may be formed together with the main housing by a molding process.

The rechargeable battery may be an electrical battery. The rechargeable battery may be capable of being discharged and charged with an electrical load several times.

The first circuit board may be any type of printed circuit board. Preferably the first circuit board is formed with a rigid dielectric substrate.

The charging port may be attached to the first circuit board via soldering, glue, or mechanical fixation. The charging port may comprise one or more protrusions for being inserted into one or more complementary shaped holes formed in the first circuit board. The one or more protrusions of the charging port may be soldered or glued to the first circuit board, thereby attaching the charging port to the first circuit board. In some embodiments the one or more protrusions of the charging port electrically connects the charging port with the first circuit board. The charging port may be a USB-C port, USB-A port, USB-B mini port, USB-B micro port, USB-C port or a lightning port or any other type charging port allowing for a power transfer. The charging port may be any charging connector capable of facilitating an electrical connection between the rechargeable battery and a power source external to the case device.

The clamping device may be formed from a heat resistant material such as a heat resistant steel alloy or other heat resistant metal alloys, alternatively the clamping device may be formed from a ceramic. The clamping device may be configured to deliver an adjustable clamping force to the charging port. The clamping force may be adjustable by a lever, a screw, or a cam. The clamping device may be configured to deliver a fixed clamping force to the charging port. In some embodiments it may be advantageous to have the clamping force fixed to minimize the number of movable components to keep the clamping device simple and easy to manufacture and mount. The clamping device may be formed from a single element or a plurality of interconnected elements. Preferably, the clamping device is formed from a resilient material, wherein the clamping device is configured to deform to thereby deliver the clamping force.

The clamping device may be connected to the first circuit board by a mechanical connection, by glue, or by soldering.

In an embodiment the clamping device is attached to the first circuit board by a snap-fit attachment.

Consequently, the mounting process of the clamping device is kept simple requiring no additional components to achieve the attachment. In the context of the invention a snap-fit attachment may be considered as an attachment obtained by pushing interlocking components of the clamping device and the first circuit board together. In an embodiment the snap-fit attachment is achieved by having the clamping device snapping onto the edges of the first circuit board.

In an embodiment the first circuit board comprises an attachment through-going hole, and wherein the clamping device comprises a snap connector configured for being inserted through the through-going hole to provide the snap-fit attachment.

Consequently, by providing an attachment through-going hole in the first circuit board to provide the snap-fit attachment, movement of the clamping device relative to the first circuit board is limited in three dimensions by the snap-fit attachment with the first circuit board, thus achieving a robust and stable attachment. Preferably, the through-going hole is formed with complementary shape to the snap connector to ensure a snug fit between the through-going hole and the snap connector.

Preferably, the attachment through-going hole is formed as a substantially circular through-going hole, however the attachment through-going hole may alternatively be formed as a slit or as a rectangular hole.

The snap connector is preferably formed as a resilient element. The snap connector may be configured to undergo a compressive deformation while being inserted into the attachment through-going hole, and upon passing through the attachment through-going hole the snap connector expands, thus achieving the snap-fit attachment. In an embodiment the snap connector is formed with a V-shape. The V-shape may provide the snap-fit attachment by having the legs of the V-shape move towards each other while inserting the snap connector into the attachment through-going hole, and upon passing through the attachment through-going hole the legs of the V-shape move away from each other to achieve the snap-fit attachment. The movement of the legs of the V-shape towards each other is caused by the span of the legs being larger than at least one dimension of the attachment through-going hole, hence leading to the legs abutting the edges of the attachment through-going hole while being inserted into the attachment through-going hole, after the legs have passed the attachment through-going hole the legs are not limited by the edges of the attachment through-going hole, and are thus allowed to move away from each other. Although, only a V-shape has been described for the snap connector, other shapes such as U-shapes, L-shapes, hook shapes, etc. are equally applicable.

In an embodiment the charging port comprises a first port side facing the first circuit board, and wherein the charging port comprises a second port side opposite the first port side, and wherein the clamping device extends over the second port side and exerts a clamping force onto the second port side towards the first port side.

Consequently, only one side of the charging port is required to have a clamping force delivered to it to assure a strong clamping of the charging port to the first circuit board.

The first port side and/or the second port side may be formed as substantially planar sides. Alternatively, the first port side and/or the second port side may be formed as curving sides, e.g., each forming a half-circle. Preferably, the first port side and/or the second port side are formed as substantially planar sides to allow for a large contact area with the clamping device to be achieved.

The clamping device may extend over opposing ends of the second port side. Having the clamping device extending over opposing ends of the second port side may help in delivering a uniform clamping pressure to the charging port. The clamping device may extend in a meandering pattern over the second port side, e.g., extending in a S-pattern, an M-pattern or similar as opposed to extending simply in a straight line over the second port side. Having the clamping device extending in a meandering path over opposing ends of the second port side may help in delivering a uniform clamping pressure to the charging port. Preferably, the clamping device is formed to conform with the second port side to allow for a large contact area between the clamping device and the second port side, thus assuring a uniform clamping pressure to be delivered to the charging port. A uniform clamping may prevent local clamping pressures from deforming the charging port, and to ease mounting of the clamping device onto the charging port.

Alternatively, the clamping device may deliver a clamping force onto several port side of the charging port, to further enlarge the contact area between the clamping device and the charging port.

In an embodiment the first circuit board comprises an attachment interface for connecting the first circuit board to the main housing, and wherein the first circuit board comprises a barrier hole arranged in-between the charging port and the attachment interface.

Consequently, heat generated at the charging port may be obstructed or at least hindered from reaching the attachment interface, and thereby deteriorating the connection between the first circuit board and the main housing. Especially heat conducted through the first circuit board is hindered from reaching the attachment interface.

The attachment interface may be a through-going hole for receiving a screw, in such cases the main housing may comprise an associated screw tower for receiving the screw. The attachment interface may be a glue pad, a snap-lock or any other mechanical engagement between the plastic housing and circuit board. Different connection types may undergo severe deterioration in situations with elevated heat e.g., the thread of the screw tower may partially melt or otherwise structurally weaken, or the glue associated with a glue pad may turn less viscous, thus going from a solid state to a more liquid state. Hence, hindering heat from reaching the attachment interface may ensure a good connection between the main housing and the first circuit board. The first circuit board may comprise one or more attachment interfaces for connecting the first circuit board to the main housing.

The barrier hole may be formed as slot extending in-between the attachment interface and the charging port. The barrier hole is configured for limiting heat conduction through the first circuit board between the charging port and the attachment interface. The barrier hole may extend the path heat generated at the charging port must travel through the first circuit board to reach the attachment interface or create a torturous path heat must travel through. The barrier hole may extend fully through the first circuit board to form a through-going hole. The barrier hole may extend partly through the first circuit board, thus forming a groove or an indentation in the first circuit board.

In an embodiment the case device comprises a second circuit board arranged within the main housing separate from the first circuit board, wherein the rechargeable battery is attached to the second circuit board.

Consequently, heat generated at the charging port and conducted through the first circuit board is hindered from reaching the rechargeable battery through heat conduction through the first circuit board. Thus, limiting heat conducted through the first circuit board from reaching the rechargeable battery, and thereby initiating a thermal-runaway event. Arranging the rechargeable battery on the second circuit board may ease handling of the rechargeable battery during manufacturing and ease the creation of electrical interfaces between the rechargeable battery and other electrical components of the case device.

Alternatively, the rechargeable battery is not arranged on a second board, and instead arranged separately from the first circuit board inside the main housing. For example, electrically connected to the charging port by one or more wires or cables.

In another embodiment the rechargeable battery is arranged on the first circuit board.

Having both the rechargeable battery and the charging port arranged on the same circuit board may facilitate a space efficient structure. In an embodiment the case device comprises a third circuit board, wherein the first circuit board is electrically connected to the second circuit board by the third circuit board, and wherein the third circuit board is a flexible circuit board.

Consequently, heat generated by the charging port is required to be conducted over the third circuit board to reach the battery by heat conduction.

In an alternative embodiment the first circuit board and the second circuit board are electrically connected by one or more wires.

In an embodiment the main housing is formed from a polymer material with a glass transition temperature below 130°C, preferably below 128°C, even more preferred below 125°C.

Consequently, the main housing may melt and/or deform to allow for heat to be transported away from the main housing to an external environment. Especially, the charging opening may expand to allow for a higher heat convection to an environment external to the main housing, thus lessening the risk of a thermal runaway event taking place at the charging port. Furthermore, the applicant has found that some lithium-ion batteries undergo a thermal runaway at a temperature of around 132 °C, consequently, by having the glass transitioning below 130°C it may assure the battery itself will not be able to reach a thermal runaway temperature before the main housing melts and/or deforms to allow for a higher heat transport away from the main housing, thereby halting or stopping the thermal runaway event happening at charging port, and thus halting or stopping the thermal runaway event from taking place at the rechargeable battery.

In an embodiment the main housing is formed from a polymer material with an ignition temperature above 550°C, preferably above 560°C, even more preferred above 570°C.

Consequently, even in the event of a thermal runaway event at the charging port it may assure the main housing does not catch on fire and pose a fire hazard to any surroundings.

In an embodiment the first circuit board extends longitudinally with a second length in the longitudinal direction, wherein the second length is larger than the first length, preferably the second length is more than one and a half times larger than the first length, even more preferred more than two times larger.

Consequently, in case of the main housing deforming or softening because of elevated temperature the first circuit board is hindered from falling out of the main housing and thus posing a fire hazard. Especially, the charging opening may be prone to deformation from elevated temperature as the charging opening is in proximity to the charging port. By having the first circuit board with a length larger than charging opening it hinders the first circuit board from falling out of the charging opening, even if the charging opening were to start deforming.

In an embodiment the case device comprises a thermally insulating material insulating the charging port from the rechargeable battery.

Consequently, heat transport caused by convection and radiation between the charging port and the rechargeable battery is reduced. Reducing heat transport between the charging port and the rechargeable battery lessens the risk of a thermal runaway event taking place in the rechargeable battery caused by elevated temperatures at the charging port.

The thermally insulating material may insulate the charging port from the rechargeable battery by partly or fully enclosing the charging port. The thermally insulating material may insulate the charging port from the rechargeable battery by being arranged in-between the rechargeable battery and the charging port.

The thermally insulating material may be made with any material configured for withstanding elevated temperatures, e.g., above 550 °C, preferably above 560°C, even more preferred above 570°C. The thermally insulating material being configured to hinder heat transport through the thermally insulating material. The thermally insulating may comprise ceramic fibers such as silicate fibers. The thermally insulating material preferably has a heat conductivity at 20°C below 1.5Wm⁻¹K⁻¹, even more preferred below 1Wm⁻¹K^{-1,} and even more preferred below 0.5Wm⁻¹K⁻¹.

In an embodiment the thermally insulating material forms a thermal chamber with the first circuit board and the main housing, and wherein the charging port is arranged within the thermal chamber.

Consequently, heat may be encapsulated and hindered from reaching other sensitive components of the case device. Furthermore, by localizing the heat an oven-like effect may be created with a localized heating at the charging port, such high localized heating may facilitate melting or other structural degradation at the charging opening, thus enlarging the charging opening and facilitating increased heat convection away from the charging port. Hence, before heat generated at the charging port reaches the rechargeable battery heat may be lead away from the case device.

The thermal chamber may substantially enclose the charging port from the rest of the electrical components of the main housing. Preferably, the thermal chamber is formed by the thermally insulating material and the first circuit board substantially abutting and/or extending in near proximity to the main housing, e.g., extending within 3mm, 2mm, 1mm, 0.5mm of the main housing, thus forming a substantially enclosed space for the charging port. The thermally insulating material, the first circuit board, and the main housing may form walls of the thermal chamber. Heat may escape the thermal chamber through the charging opening.

In an embodiment the thermally insulating material has a thickness of 1mm - 5mm, preferably 2mm - 4mm.

The applicant has found that even a small thickness of 1mm - 5mm is enough to prevent heat generated at the charging port from reaching the rechargeable battery and creating a thermal runaway event. This is highly advantageous as space requirements for the case device may be strict, thus imposing limitations on the space available for different components.

In the context of this disclosure the thickness of the thermally insulating material may be understood as the amount of thermally insulating material blocking the direct path between the charging port and the rechargeable battery. For example, if the thermally insulating material has a thickness of 3mm, heat developed at the charging port would have the direct path between the insulating material and the rechargeable battery obstructed by 3mm of the thermally insulating material. The direct path should be interpreted as the smallest distance between two objects.

In an embodiment movement of the thermally insulating material is delimited by the first circuit board and the main housing.

In an embodiment the charging port is a USB-C port.

In an embodiment the main housing is configured for storing one or more hearing devices, and wherein the rechargeable battery is configured charging the one or more hearing devices stored by the case device.

Alternatively, the case device may be formed as an ear cup of a headset, wherein the rechargeable battery is configured to power the headset.

These and other objects of the invention are achieved by the invention defined in the independent claims and explained in the following description. Further objects of the invention are achieved by embodiments defined in the dependent claims and in the detailed description of the invention.

Within this document, the singular forms "a", "an", and "the" specify the presence of a respective entity, such as a feature, an operation, an element, or a component, but do not preclude the presence or addition of entities. Likewise, the words "have", "include" and "comprise" specify the presence of respective entities, but do not preclude the presence or addition of entities. The term "and/or" specifies the presence of one or more of the associated entities.

### BRIEF DESCRIPTION OF THE DRAWINGS

The invention will be explained in more detail below together with preferred embodiments and with reference to the drawings in which:
Fig. 1 shows a schematic perspective view of a case device according to an embodiment of the disclosure.
Figs 2 and 3 show different schematic perspective views of a first circuit board with a charging port and a clamping device according to an embodiment of the disclosure.
Fig. 4 shows a schematic cross-sectional view of a first circuit board with a charging port mounted in a main housing of a case device according to an embodiment of the disclosure.
Fig. 5 shows a schematic side view of a circuit board assembly according to an embodiment of the disclosure.
Fig. 6 shows a schematic cross-sectional view of the circuit board assembly of fig. 5 mounted in a main housing of a case device according to an embodiment of the disclosure.
Fig. 7 shows a schematic side view of another circuit board assembly according to an embodiment of the disclosure.
Fig. 8 shows a schematic perspective view of the circuit board assembly of fig. 7
Fig. 9 shows a schematic cross-sectional view of the circuit board assembly of fig. 7 and fig. 8 mounted in a main housing of a case device according to an embodiment of the disclosure.

The figures are schematic and simplified for clarity, and they just show details essential to understanding the invention, while other details may be left out. Where practical, like reference numerals and/or labels are used for identical or corresponding parts.

### DETAILED DESCRIPTION OF THE DRAWINGS

The detailed description given herein and the specific examples indicating preferred embodiments of the invention are intended to enable a person skilled in the art to practice the invention and should thus be regarded mainly as an illustration of the invention. The person skilled in the art will be able to readily contemplate applications of the present invention as well as advantageous changes and modifications from this description without deviating from the scope of the invention. Any such changes or modifications mentioned herein are meant to be non-limiting for the scope of the invention. An aspect or an advantage described in conjunction with a particular embodiment is not necessarily limited to that embodiment and can be practiced in any other embodiments even if not so illustrated, or if not so explicitly described.

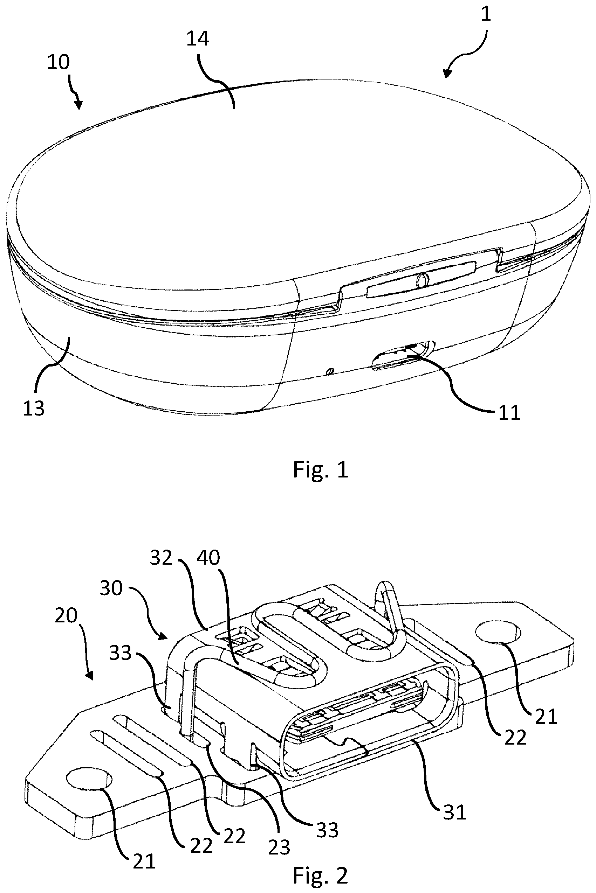

Referring initially to Fig. 1 depicting a schematic perspective view of a case device 1 according to an embodiment of the disclosure. The case device 1 is embodied as a charging cradle 1 configured for storing and charging one or more hearing devices such as one or more earbuds or one or more hearing aids. The case device 1 comprises a main housing 10. The main housing 10 comprises a charging opening 11. The charging opening 11 is formed in an outer surface of the main housing 10, thus allowing access to a charging port 30 arranged within the charging opening 11 to be accessible by a user of the case device 1. The charging opening 11 allows for a plug to be inserted from an exterior of the case device and into the charging port 11. The main housing 10 is formed from a polymer material. The polymer material may be a PC/ABS (Polycarbonate/acrylonitrile butadiene styrene) polymer. The polymer material has a glass transition temperature below 130°C, preferably below 128°C, even more preferred below 125°C. The polymer material has an ignition temperature above 550°C, preferably above 560°C, even more preferred above 570°C. The main housing comprises a bottom part 13 and a top part 14. The bottom part 13 and the top part 14 are hingedly connected, thus allowing for the case device 1 to be opened and allowing a user of the case device 1 to place one or more hearing devices within the main housing 10.

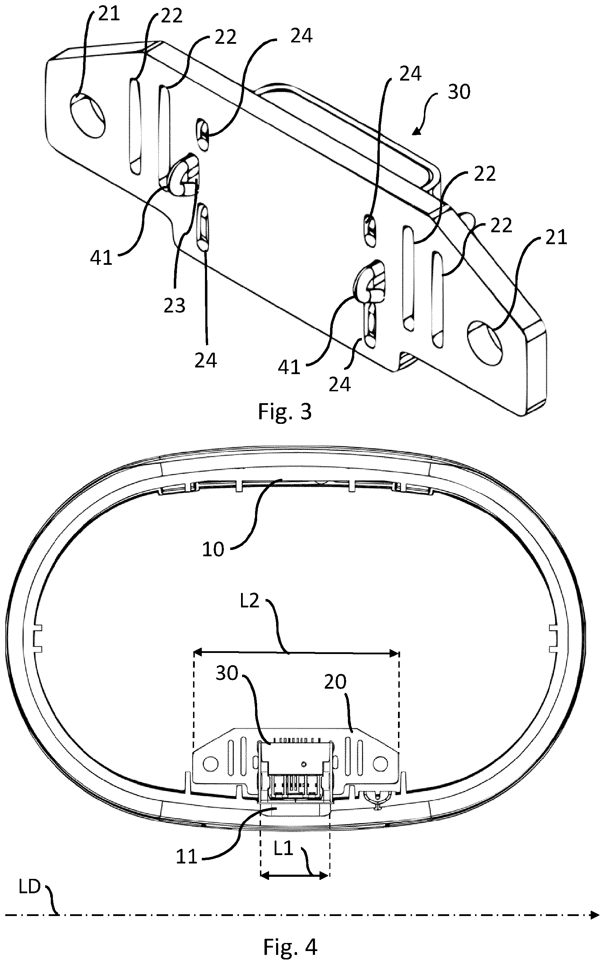

Referring to Figs 2 and 3 depicting different schematic perspective views of a first circuit board 20 with a charging port 30 and a clamping device 40 according to an embodiment of the disclosure. The charging port 30 is attached to the first circuit board 20. A first port side 31 of the charging port 30 faces towards the first circuit board 20. The charging port 30 comprises several protrusions 33, which extend into complementary holes 24 of the first circuit board 20. The protrusions 33 are soldered onto the first circuit board 20, thus attaching and electrically connecting the charging port 30 to the first circuit board 20. The clamping device 40 is also attached to the first circuit board 20. The clamping device 40 is configured for clamping the charging port 30 onto the first circuit board 20. In the shown embodiment, the clamping device 40 clamps the charging port 30 onto the first circuit board 20. The clamping device 40 is attached to the first circuit board 20 by a snap-fit attachment. The clamping device 40 comprises a snap connector 41 configured for being inserted through an attachment through-going hole 23 to provide the snap-fit attachment. The attachment through-going hole 23 is formed in the first circuit board 20. In the shown embodiment the clamping device 40 comprises two snap-connectors 41 and the first circuit board 20 comprises two corresponding attachment through-going holes 23 for receiving the two snap-connectors 41 of the clamping device in a snap-fit attachment. Each of the snap-connectors 41 are formed by bending corresponding stems of the clamping device 40 into hook shapes. The bents forming the snap-connectors 41 allow the snap-connectors 41 to deform, hence when inserting the snap-connectors 41 into the attachment through-going holes 23, the snap-connectors 41 compress, hence allowing the snap-connectors to pass through the complementary holes 23. When the snap-connectors 41 have passed through the complementary holes 23, the snap-connectors 41 snap back into an equilibrium position and hooks onto the first circuit board 20, thus providing the snap-fit attachment. The charging port 30 comprises a second port side 32 opposite the first port side 31. The clamping device 40 extends over the second port side 32. The clamping device 40 exerts a clamping force onto the second port side 32 towards the first port side 31. The first circuit board 20 comprises an attachment interface 21. In the shown embodiment, the first circuit board 20 comprises two attachment interfaces 21 provided as through-going holes in the first circuit board 20. The two attachment interfaces 21 are arranged on opposing sides of the charging port 30. The attachment interfaces 21 are each configured for receiving a screw for connecting the first circuit board 20 to the main housing 10. The main housing 10 may comprise one or more threaded bores for receiving screws, to thereby connect the first circuit board 20 with the main housing 10. The first circuit board 20 comprises a barrier hole 22. In the shown embodiment, the first circuit board 20 comprises four barrier holes 22. The barrier holes 22 are arranged in-between the charging port 30 and the attachment interface 21. The barrier holes 22 are arranged in pairs of twos on opposing sides of the charging port 30. The barrier holes 22 are formed as through-going slots in the first circuit board 20.

Referring to fig. 4 showing a schematic cross-sectional view of a first circuit board 20 with a charging port 30 mounted in a main housing 10 of a case device 1 according to an embodiment of the disclosure. The main housing 10 comprises a charging opening 11 extending longitudinally with a first length L1 in a longitudinal direction LD. The first circuit board 20 extends longitudinally with a second length L2 in the longitudinal direction LD. The second length L2 is larger than the first length L1. In the shown embodiment the second length L2 is more than two times larger than first length. The second length L2 is more than three times larger than the first length L1.

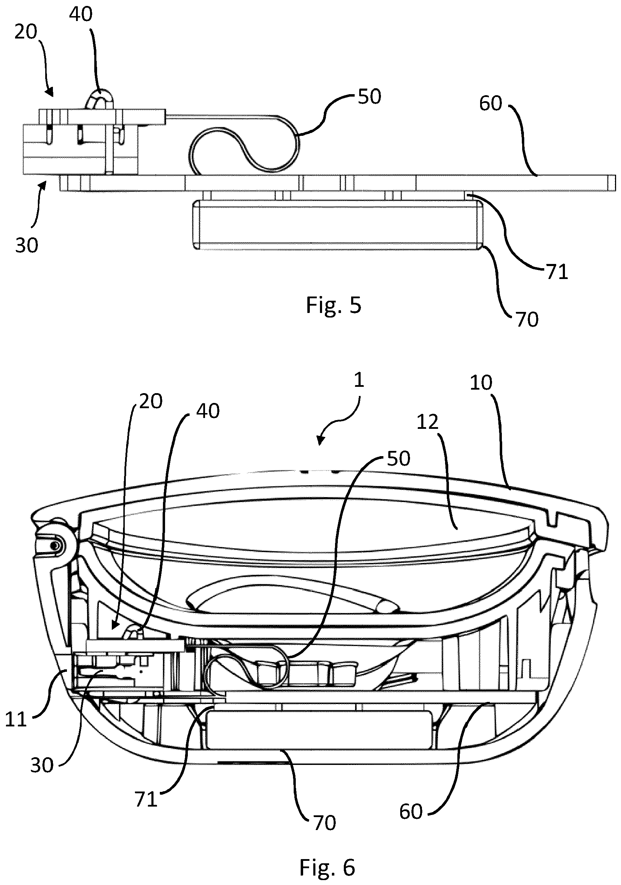

Referring to fig. 5 and fig. 6, where fig. 5 shows a schematic side view of a circuit board assembly according to an embodiment of the disclosure, and fig. 6 shows a schematic cross-sectional view of the circuit board assembly of fig. 5 mounted in a main housing 10 of a case device 1 according to an embodiment of the disclosure. The circuit board assembly comprises a first circuit board 20, a charging port 30, a clamping device 40, a second circuit board 60, a third circuit board 50, and a rechargeable battery. The circuit board assembly is configured for being arranged in the main housing 10 of a case device 1. The rechargeable battery 70 is connected to the second circuit board 60. The rechargeable battery 70 is connected to the second circuit board 60 by one or more battery connectors 71. The battery connectors 71 may be solders, glue, or mechanical connectors. The battery connectors 71 may electrically connect the rechargeable battery 70 with the second circuit board 60. In the shown embodiment, the battery connectors 71 are adhesive foam pads, and electrical connection between the rechargeable battery 70 and the second circuit board 60 is achieved by wires. The rechargeable battery 70 is electrically connected to the second circuit board 60. The second circuit board 60 is arranged separately from the first circuit board 20. The first circuit board 20 is electrically connected to the second circuit board 60 by the third circuit board 50. The third circuit board 50 is in the shown embodiment a flexible circuit board. The charging port 30 is electrically connected to the rechargeable battery 70 via the first circuit board 20, the third circuit board 50, and the second circuit board 60. The charging port 30 is electrically connected to the rechargeable battery 70 to allow for recharging of the rechargeable battery 70. The charging port 30 is a USB-C port connected to the first circuit board 20. Although, the charging port 30 in the shown embodiment is a USB-C port, other charging ports such as USB-A, USB-B mini, USB-B micro, USB-C, or a lightning may be equally applicable. The circuit board assembly is arranged within the main housing 10 to allow for the charging port 30 to be accessible for a user of the case device 1 via the charging opening 11 formed in the main housing 10.

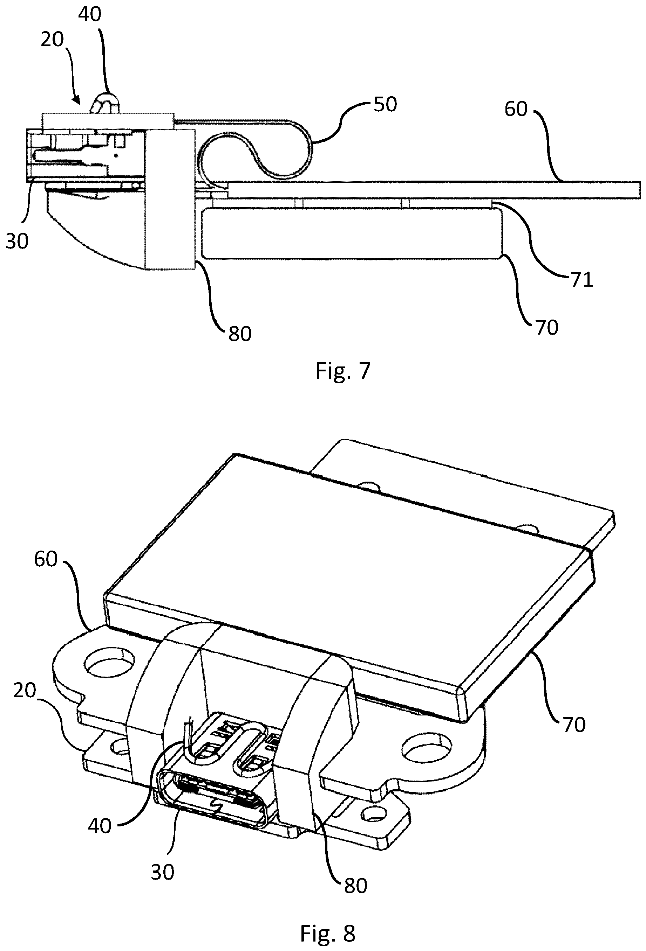

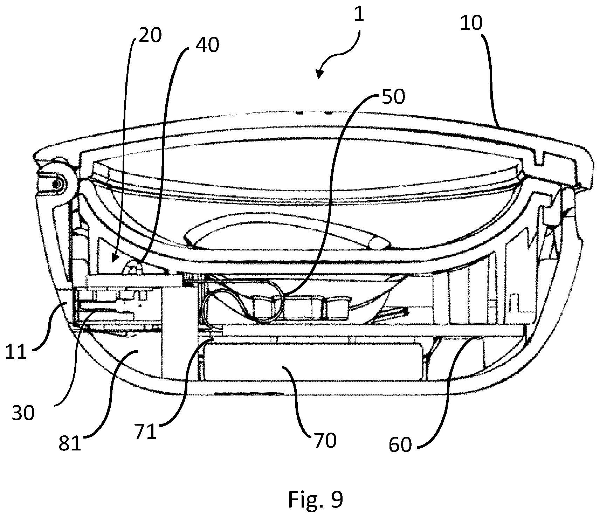

Referring to figs 7 to 9, where fig. 7 shows a schematic side view of a circuit board assembly according to another embodiment of the disclosure, fig. 8 shows a schematic perspective view of the circuit board assembly of fig. 7, and fig. 9 shows a schematic cross-sectional view of the circuit board assembly of figs 7 and 8 mounted in a main housing 10 of a case device 1 according to an embodiment of the disclosure. The circuit board assembly shown in figs 7 and 8 is like the circuit board assembly shown in fig. 5, however, differs in that the circuit board assembly comprises a thermally insulating material 80 arranged in-between the rechargeable battery 70 and the charging port 30. The thermally insulating material 80 is configured for limiting heat transport between the charging port 30 and the rechargeable battery 70. The thickness of the thermally insulating material 80 is 1mm - 5mm. The thermally insulating material 80 comprises ceramic fibers. The thermally insulating material 80 partially encloses the charging port 30. When the circuit board assembly is arranged in the main housing 10, the thermally insulating material 80 forms a thermal chamber 81 with the first circuit board 20 and the main housing 10. The charging port 30 is arranged within the thermal chamber 81. The thermal chamber 81 is formed by the thermally insulating material 80 abutting the main housing 10 and the first circuit board 20 and by the first circuit board 20 extending towards the main housing 10.

The invention is not limited to the embodiments disclosed herein, and the invention may be embodied in other ways within the subject-matter defined in the following claims. As an example, features of the described embodiments may be combined arbitrarily, e.g., in order to adapt devices according to the invention to specific requirements.

Any reference numerals and labels in the claims are intended to be non-limiting for the scope of the claims.

## Claims

1. A case device, comprising:
a main housing comprising a charging opening extending longitudinally with a first length in a longitudinal direction,
a rechargeable battery arranged within the main housing,
a charging port electrically connected to the rechargeable battery to allow for recharging of the rechargeable battery, and wherein the charging port is accessible by a user of the case device via the charging opening,
a first circuit board arranged within the first main housing, wherein the charging port is attached to the first circuit board, and wherein the charging port is electrically connected to the first circuit board,
**characterized in that,** the case device comprises a clamping device attached to the first circuit board and
being configured for clamping the charging port onto the first circuit board.

2. A case device according to claim 1, wherein the clamping device is attached to the first circuit board by a snap-fit attachment.

3. A case device according to claim 2, wherein the first circuit board comprises an attachment through-going hole, and wherein the clamping device comprises a snap connector configured for being inserted through the attachment through-going hole to provide the snap-fit attachment.

4. A case device according to any of the preceding claims, wherein the charging port comprises a first port side facing the first circuit board, and wherein the charging port comprises a second port side opposite the first port side, and wherein the clamping device extends over the second port side and exerts a clamping force onto the second port side towards the first port side.

5. A case device according to any of the preceding claims, wherein the first circuit board comprises an attachment interface for connecting the first circuit board to the main housing, and wherein the first circuit board comprises a through-going hole arranged in-between the charging port and the attachment interface.

6. A case device according to any of the preceding claims comprising a second circuit board arranged within the main housing separate from the first circuit board, wherein the rechargeable battery is attached to the second circuit board.

7. A case device according to claim 6, comprising a third circuit board, wherein the first circuit board is electrically connected to the second circuit board by the third circuit board, and wherein the third circuit board is a flexible circuit board.

8. A case device according to any of the preceding claims, wherein the main housing is formed from a polymer material with a glass transition temperature below 130°C, preferably below 128°C, even more preferred below 125°C.

9. A case device according to any of the preceding claims, wherein the main housing is formed from a polymer material with an ignition temperature above 550°C, preferably above 560°C, even more preferred above 570°C.

10. A case device according to any of the preceding claims, wherein the first circuit board extends longitudinally with a second length in the longitudinal direction, wherein the second length is larger than the first length, preferably the second length is more than one and a half times larger than the first length, even more preferred more than two times larger.

11. A case device according to any of the preceding claims comprising a thermally insulating material insulating the charging port from the rechargeable battery.

12. A case device according to claim 11, wherein the thermally insulating material forms a thermal chamber with the first circuit board and the main housing, and wherein the charging port is arranged within the thermal chamber.

13. A case device according to claim 11 or 12, wherein the thermally insulating material has a thickness of 1mm - 5mm, preferably 2mm - 4mm.

14. A case device according to any one of claims 11-13, wherein the thermally insulating material comprises ceramic fibers.

15. A case device according to any of the preceding claims, wherein the main housing is configured for storing one or more hearing devices, and wherein the rechargeable battery is configured charging the one or more hearing devices stored by the case device.
